(19) Europäisches Patentamt
European Patent Office
Office européen des brevets

(11) **EP 4 675 574 A1**

(12) **EUROPEAN PATENT APPLICATION**

(43) Date of publication:
**07.01.2026 Bulletin 2026/02**

(21) Application number: **24217481.1**

(22) Date of filing: **04.12.2024**

(51) International Patent Classification (IPC):
*G06V 10/82* (2022.01)     *G06V 20/56* (2022.01)

(52) Cooperative Patent Classification (CPC):
**G06V 10/82; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.07.2024 KR 20240088260**

(71) Applicants:
• **Hyundai Motor Company**
**Seoul 06797 (KR)**

• **Kia Corporation**
**Seocho-gu**
**Seoul 06797 (KR)**

(72) Inventor: **LEE, Nam Hyung**
**18280 Hwaseong-si (KR)**

(74) Representative: **Viering, Jentschura & Partner mbB**
**Patent- und Rechtsanwälte**
**Am Brauhaus 8**
**01099 Dresden (DE)**

(54) **VEHICLE CONTROL APPARATUS AND METHOD THEREOF**

(57)     An apparatus for controlling autonomous driving of a vehicle is introduced. The apparatus may comprise a first sensor configured to capture an image and a second sensor configured to acquire a cluster of points. The apparatus may further comprise a memory storing multiple neural network models and a processor configured to process data from the sensors. The processor obtains a first value, indicating a score for the type of a point associated with the second sensor, by inputting the image to a first neural network model. The processor also obtains a second value, indicating a score for the same type, by inputting the cluster of points to a second neural network model. Using these values, the processor determines a similarity value among points in the cluster. Based on this similarity value, the apparatus outputs a selected value, generates a signal, and subsequently controls the vehicle's autonomous driving.

VEHICLE CONTROL APPARATUS
100

PROCESSOR
110

CAMERA
120

LIDAR
130

MEMORY
140

FIG.1

**Description**

**CROSS-REFERENCE TO RELATED APPLICATION**

This application claims the benefit of priority to Korean Patent Application No. 10-2024-0088260, filed in the Korean Intellectual Property Office on July 04, 2024, the entire contents of which are incorporated herein by reference.

**TECHNICAL FIELD**

The present disclosure relates to a vehicle control apparatus and a method thereof, and more particularly, relates to technologies using a camera and light detection and ranging (LiDAR) .

**BACKGROUND**

The matters described in this Background section are only for the enhancement of understanding of the background of the disclosure, and should not be taken as acknowledgment that they correspond to prior art already known to those skilled in the art. Various studies for determining an external object using various sensors are in progress to assist with driving of a host vehicle.

Particularly, while the host vehicle is operating in a driving assist mode or an autonomous driving mode, an external object may be identified using a camera and/or LiDAR.

Sensor fusion may be used, if determining the external object using the camera and/or the LiDAR. If an error occurs in one sensor if the sensor fusion is used, because there is no output, the external object fails to be accurately identified.

Thus, various studies for obtaining the output of determining the external object even if using a plurality of sensors are in progress.

**SUMMARY**

According to the present disclosure, an apparatus for controlling autonomous driving of a vehicle, the apparatus may comprise, a first sensor configured to obtain an image, a second sensor configured to obtain a cluster of points, a memory storing a plurality of neural network models, and a processor configured to, obtain, based on inputting the image to a first neural network model among the plurality of neural network models and based on the cluster of points, a first value, wherein the first value indicates a first score for a type of a point associated with the second sensor, and wherein the point corresponds to at least one pixel included in the image, obtain, based on inputting the cluster of points to a second neural network model among the plurality of neural network models, a second value, wherein the second value indicates a second score for the type of the point, and wherein the point is included in the cluster of points, and output, based on obtaining a similarity value among a plurality of points included in the cluster of points using the first value and the second value, at least one of, the first value, the second value, or a third value obtained by the image and the cluster of points, generate a signal associated with the similarity value among the plurality of points, and control, based on the signal, autonomous driving of the vehicle.

The apparatus, wherein the processor is configured to, obtain, based on inputting the first value and the second value to a third neural network model among the plurality of neural network models, the third value.

The apparatus, wherein the processor is configured to, obtain, based on projecting the cluster of points onto a two-dimensional (2D) coordinate system to compare the at least one pixel with at least one point included in the cluster of points, the first value.

The apparatus, wherein the processor is configured to, obtain, based on inputting the first value and the second value to a first algorithm, the similarity value.

The apparatus, wherein the processor is configured to, obtain, based on the similarity value being less than or equal to a threshold value, a first identifier, wherein the first identifier indicates that the first value and the second value are not similar to each other, or obtain, based on the similarity value being greater than the threshold value, a second identifier, wherein the second identifier indicates that the first value and the second value are similar to each other.

The apparatus, wherein the processor is configured to, input, based on obtaining the first identifier, the first value and the second value to a third neural network model among the plurality of neural network models to obtain the third value.

The apparatus, wherein the processor is configured to, output, based on obtaining the second identifier, a fourth value obtained by inputting the first value and the second value to a second algorithm.

The apparatus, wherein the processor is configured to, compare, based on obtaining the first identifier, types of other points located within a designated distance from at least one point included in the cluster of points with a type of the at least one point.

The apparatus, wherein the memory may comprise at least one of, a training dataset for training the plurality of neural network models, or a validation dataset for validating the plurality of neural network models.

The apparatus, wherein the processor is configured to, train, based on the training dataset, the first neural network model and the second neural network model, perform validation, based on the validation dataset, for the trained first neural network model and the trained second neural network model, and train, based on the validation, at least one of, the first neural network model among the plurality of neural network models, the second neural network model among the plurality of neural network models, or a third neural network model among the plurality of neural network models.

According to the present disclosure, a method performed by an apparatus for controlling autonomous driving of a vehicle, the method may comprise, obtaining, based on inputting an image to a first neural network model and based on a cluster of points, a first value, wherein the first value indicates a first score for a type of a point associated with a second sensor, wherein the point corresponds to at least one pixel included in the image, wherein the image is obtained via a first sensor, wherein the first neural network model is among a plurality of neural network models stored in a memory, and wherein the cluster of points are obtained via the second sensor, obtaining, based on inputting the cluster of points to a second neural network model among the plurality of neural network models, a second value, wherein the second value indicates a second score for the type of the point, and wherein the point is included in the cluster of points, and outputting, based on obtaining a similarity value among a plurality of points included in the cluster of points using the first value and the second value, at least one of, the first value, the second value, or a third value obtained by the image and the cluster of points, generating a signal associated with the similarity value among the plurality of points, and controlling, based on the signal, autonomous driving of the vehicle.

The method may further comprise, obtaining, based on inputting the first value and the second value to a third neural network model among the plurality of neural network models, the third value.

The method may further comprise, obtaining, based on projecting the cluster of points onto a two-dimensional (2D) coordinate system to compare the at least one pixel with at least one point included in the cluster of points, the first value.

The method may further comprise, obtaining, based on inputting the first value and the second value to a first algorithm, the similarity value.

The method may further comprise, obtaining, based on the similarity value being less than or equal to a threshold value, a first identifier, wherein the first identifier indicates that the first value and the second value are not similar to each other, or obtaining, based on that the similarity value being greater than the threshold value, a second identifier, wherein the second identifier indicates that the first value and the second value are similar to each other.

The method may further comprise, inputting, based on obtaining the first identifier, the first value and the second value to a third neural network model among the plurality of neural network models to obtain the third value.

The method may further comprise, outputting, based on obtaining the second identifier, a fourth value obtained by inputting the first value and the second value to a second algorithm.

The method may further comprise, comparing, based on obtaining the first identifier, types of other points located within a designated distance from at least one point included in the cluster of points with a type of the at least one point.

The method, wherein the memory may comprise at least one of, a training dataset for training the plurality of neural network models, or a validation dataset for validating the plurality of neural network models.

The method may further comprise, training, based on the training dataset, the first neural network model and the second neural network model, performing validation, based on the validation dataset, for the trained first neural network model and the trained second neural network model, and training, based on the validation, at least one of, the first neural network model among the plurality of neural network models, the second neural network model among the plurality of neural network models, or a third neural network model among the plurality of neural network models.

## BRIEF DESCRIPTION OF THE DRAWINGS

The above and other objects, features and advantages of the present disclosure will be more apparent from the following detailed description taken in conjunction with the accompanying drawings:

FIG. 1 shows an example of a block diagram associated with a vehicle control apparatus according to an example of the present disclosure;

FIG. 2 shows an example of a process of outputting a result value, in an example of the present disclosure;

FIG. 3 shows an example of information or data obtained by a camera and/or LiDAR, in an example of the present disclosure;

FIG. 4 shows an example of applying a KNN sampler, in an example of the present disclosure;

FIG. 5 shows an example of training neural network models, in an example of the present disclosure;

FIG. 6 shows an example of a flowchart associated with a vehicle control method according to an example of the present disclosure; and

FIG. 7 shows an example of a computing system associated with a vehicle control apparatus or a vehicle control method according to an example of the present disclosure.

## DETAILED DESCRIPTION

Hereinafter, some examples of the present disclosure will be described in detail with reference to the exemplary drawings. In adding the reference numerals to the components of each drawing, it should be noted that the identical component is designated by the identical numerals even when they are displayed on other drawings. In addition, a detailed description of well-known features or functions will be ruled out in order not to unnecessarily obscure the gist of the present disclosure.

In describing components of examples of the present disclosure, the terms first, second, A, B, (a), (b), and the like may be used herein. These terms are only used to distinguish one component from another component, but do not limit the corresponding components irrespective of the order or priority of the corresponding components. Furthermore, unless otherwise defined, all terms including technical and scientific terms used herein have the same meaning as being generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

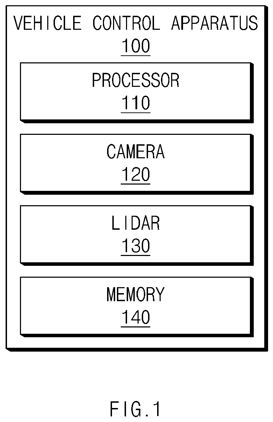

Hereinafter, examples of the present disclosure will be described in detail with reference to FIGS. 1 to 7.

FIG. 1 shows an example of a block diagram associated with a vehicle control apparatus according to an example of the present disclosure.

Referring to FIG. 1, a vehicle control apparatus 100 according to an example of the present disclosure may be implemented inside or outside a vehicle, and some of the components included in the vehicle control apparatus 100 may be implemented inside or outside the vehicle. In this case, the vehicle control apparatus 100 may be integrally configured with control units in the vehicle or may be implemented as a separate device to be connected with the control units of the vehicle by a separate connection means. For example, the vehicle control apparatus 100 may further include components which are not shown in FIG. 1.

The vehicle control apparatus 100 according to an example may include a processor 110, a first sensor (e.g., a camera 120), a second sensor (e.g., light detection and ranging (LiDAR) 130), and a memory 140. The processor 110, the camera 120, the LiDAR 130, and the memory 140 may be electronically or operably coupled with each other by an electronical component including a communication bus.

Hereinafter, that pieces of hardware are operably coupled with each other may include that a direct connection or an indirect connection between the pieces of hardware is established in a wired or wireless manner, such that second hardware is controlled by first hardware among the pieces of hardware.

The different blocks are shown, but an example is not limited thereto. Some of the pieces of hardware of FIG. 1 may be included in a single integrated circuit including a system on a chip (SoC). Types of the pieces of hardware included in the vehicle control apparatus 100 and/or the number of the pieces of hardware are/is not limited to those shown in FIG. 1. For example, the vehicle control apparatus 100 may include only some of the pieces of hardware shown in FIG. 1.

The vehicle control apparatus 100 according to an example may include hardware for processing data based on one or more instructions. The hardware for processing the data may include the processor 110.

For example, the hardware for processing the data may include an arithmetic and logic unit (ALU), a floating point unit (FPU), a field programmable gate array (FPGA), a central processing unit (CPU), and/or an application processor (AP). The processor 110 may have a structure of a single-core processor or may have a structure of a multi-core processor including a dual core, a quad core, a hexa core, or an octa core.

The camera 120 of the vehicle control apparatus 100 according to an example may include one or more of optical sensors (e.g., charged coupled device (CCD) sensors or complementary metal oxide semiconductor (CMOS) sensors) which generate an electrical signal indicating a color and/or a brightness of light. The plurality of optical sensors included in the camera 120 may be arranged in the form of a two-dimensional (2D) array. The camera 120 may obtain electrical signals of the plurality of optical sensors substantially at the same time and may generate an image or a frame including a plurality of pixels which correspond to light arriving at the optical sensors in the 2D array and are arranged in 2 dimensions.

For example, photo data captured using the camera 120 may refer to plurality of images obtained from the camera 120. For example, video data captured using the camera 120 may refer to a sequence of a plurality of images obtained according to a designated frame rate from the camera 120.

For example, the camera 120 may obtain an image including a visual object corresponding to an external object. For example, the image may include at least one pixel.

The LiDAR 130 of the vehicle control apparatus 100 according to an example may obtain datasets for identifying or determining surrounding things around the vehicle control apparatus 100 or a host vehicle including the vehicle control apparatus 100. For example, the LiDAR 130 may identify or determine at least one of a position of the surrounding thing, a motion direction of the surrounding thing, or a speed of the surrounding thing, or any combination thereof, based on that a pulse laser signal radiated from the LiDAR 130 is reflected from the surrounding object to return.

For example, the LiDAR 130 may obtain a cluster of points (e.g., a point cloud), based on the pulse laser signal reflected from the external object. For example, the point cloud may include at least one point. For example, a point cloud may comprise a collection of data points in a three-dimensional coordinate system, representing the external surface of an object or environment. Each point in the cloud may have its own set of X, Y, and Z coordinates, and/or additional information (e.g., color or intensity). The point cloud may be generated by 3D scanners, LiDAR, or photogrammetry techniques, and may be used in various applications such as 3D modeling, computer vision, and/or robotics, etc. They may provide a highly detailed and/or accurate representation of complex surfaces and/or structures, making them ideal for tasks like object recognition, environment mapping, and/or digital reconstruction, etc.

The memory 140 of the vehicle control apparatus 100 according to an example may include a hardware component for storing data and/or an instruction input and/or output from the processor 110 of the vehicle control apparatus 100.

For example, the memory 140 may include a volatile memory including a random-access memory (RAM) and/or a non-volatile memory including a read-only memory (ROM).

For example, the volatile memory may include at least one of a dynamic RAM (DRAM), a static RAM (SRAM), a cache RAM, or a pseudo SRAM (PSRAM), or any combination thereof.

For example, the non-volatile memory may include at least one of a programmable ROM (PROM), an erasable PROM (EPROM), an electrically erasable PROM (EEPROM), a flash memory, a hard disk, a compact disc, a solid state drive (SSD), or an embedded multimedia card (eMMC), or any combination thereof.

For example, the memory 140 may include a plurality of neural network models. For example, the plurality of neural network models may be stored in the memory 140.

The processor 110 of the vehicle control apparatus 100 according to example may input the image obtained by the camera 120 to a first neural network model among the plurality of neural network models.

For example, the first neural network model may include a camera segmentation network model. For example, the first neural network model may output information associated with a type of each of the pixels included in the image, based on that the image is input. For example, the type of each of the pixels included in the image may include a type of a visual object corresponding to an external object represented on each of the pixels.

In an example, the processor 110 may obtain a first result value indicating a score for a type of a LiDAR point corresponding to at least one pixel included in the image, based on inputting the image to the first neural network model. For example, the processor 110 may obtain the first result value indicating the score for the type of the LiDAR point corresponding to the at least one pixel included in the image, based on inputting the image to the first neural network model and the point cloud obtained by the LiDAR 130.

Result values (e.g., a first result value, a second result value, a third result value, and/or a fourth result value) described below may include probability values indicating a type of a pixel and/or a type of a point.

For example, the first result value may be represented as $[c_1^k,\ c_2^k,\ c_3^k,\ c_4^k,\ c_5^k]$. For example, c in the first result value may refer to indicating a value associated with a type of a LiDAR point obtained using an image obtained by the camera 120. For example, k in the first result value may refer to a pixel's number. For example, "1, 2, 3, 4, or 5" represented as a subscript in the first result value may include a value indicating a type. For example, subscript 1 may include a value indicating that the type of the visual object corresponding to the pixel is a vehicle. For example, subscript 2 may include a value indicating that the type of the visual object corresponding to the pixel is a two-wheeled vehicle. For example, subscript 3 may include a value indicating that the type of the visual object corresponding to the pixel is a pedestrian. For example, subscript 4 may include a value indicating that the type of the visual object corresponding to the pixel is a special vehicle. For example, subscript 5 may include a value indicating that the type of the visual object corresponding to the pixel is the ground. However, an example of the present disclosure is not limited to those described above.

For example, the processor 110 may project the point cloud onto a two-dimensional (2D) coordinate system. For example, the processor 110 may project the point cloud onto a plane corresponding to the image. For example, the 2D coordinate system may the plane corresponding to the image. The processor 110 may project the point cloud onto the 2D coordinate system to compare the at least one pixel with the at least one point.

For example, the processor 110 may obtain the first result value, based on projecting the point cloud onto the 2D coordinate system to compare a type of the at least one pixel with a type of the at least one point.

In an example, the processor 110 may input the point cloud obtained by the LiDAR 130 to a second neural network model among the plurality of neural network models.

For example, the second neural network model may output information associated with a type of each of the points included in the point cloud, based on that the point cloud is input. For example, the type of each of the points included in the point cloud may include a type of an external object corresponding to the point.

In an example, the processor 110 may obtain the second result value indicating a score for the type of the LiDAR point included in the point cloud, based on inputting the point cloud to the second neural network model.

For example, the second result value may be represented as $[l_1^k,\ l_2^k,\ l_3^k,\ l_4^k,\ l_5^k]$. For example, l in the second result value may refer to a value associated with the LiDAR 130. For example, k in the second result value may refer to a point's number. For example, "1, 2, 3, 4, or 5" represented as a subscript in the second result value may include a value indicating a type. For example, subscript 1 may include a value indicating that the type of the visual object corresponding to the pixel is a vehicle. For example, subscript 2 may include a value indicating that the type of the visual object corresponding to the pixel is a two-wheeled vehicle. For example, subscript 3 may include a value indicating that the type of the visual object corresponding to the pixel is a pedestrian. For example, subscript 4 may include a value indicating that the type of the visual object corresponding to the pixel is a special vehicle. For example, subscript 5 may include a value indicating that the type of the visual object corresponding to the pixel is the ground. However, an example of the present disclosure is not limited to those described above. The subscripts indicating the type in the first result value may be substantially the same as the subscripts indicating the type in the second result value.

In an example, the processor 110 may obtain a similarity between the plurality of points (e.g., LiDAR points) included in the point cloud using the first result value and the second result value. The similarity may refer to a degree of resemblance or match between various points within a point cloud (e.g., LiDAR points). This similarity may be determined using certain metrics or result values, such as the first result value and the second result value, which may be derived from features like spatial distance, intensity, or classification labels of the plurality of points. The purpose of measuring similarity may be to identify or determine clusters, patterns, or features in the point cloud.

For example, the processor 110 may output at least one of the first result value, the second result value, or the third result value obtained by the image and the point cloud, or any combination thereof, based on obtaining the similarity between the plurality of points included in the point cloud using the first result value and the second result value.

For example, the processor 110 may obtain the similarity between the plurality of points included in the point cloud, based on inputting the first result value and the second result value to a first designated algorithm (or a first sampler). For example, the first sampler may be referred to as a prediction sampler.

For example, the processor 110 may obtain a first identifier indicating that the first result value and the second result value are not similar to each other, based on that the similarity output from the first sampler is less than or equal to a threshold.

For example, the processor 110 may input the first result value and the second result value to the third neural network model to obtain the third result value, based on obtaining the first identifier.

For example, the third neural network model may include a vision transformer encoder and/or a multi-layer perceptron mixer.

For example, the processor 110 may obtain a second identifier indicating that the first result value and the second result value are similar to each other, based on that the similarity output from the first sampler is greater than the threshold.

For example, the processor 110 may input the first result value and the second result value to a second designated algorithm to obtain a fourth result value, based on obtaining the second identifier. For example, the processor 110 may output the fourth result value, based on that the fourth result value is obtained. For example, the second designated algorithm may include a geometric mean.

For example, the processor 110 may compare types of other points located within a designated distance from the at least one point with a type of the at least one point, based on obtaining the first identifier.

For example, the processor 110 may compare the types of the other points located within the designated distance from the at least one point with the type of the at least one point, by using a second sampler, based on obtaining the first identifier.

For example, the processor 110 may input the second result value to the second sampler, based on obtaining the first identifier. For example, the second sampler may be referred to as a K-nearest neighbor (KNN) sampler. For example, the processor 110 may input the information obtained from the second sampler to the third neural network model among the plurality of neural network models. Based on obtaining a type of a pixel or point corresponding to the input information from the third neural network model, the processor 110 may output the obtained type.

In an example, the processor 110 may train at least one of the first neural network model, the second neural network model, or the third neural network model, or any combination thereof.

For example, the processor 110 may train the at least one of the first neural network model, the second neural network model, or the third neural network model, or the any combination thereof, using at least one of a training dataset, a validation dataset, or a test dataset, or any combination thereof.

For example, the processor 110 may train the first neural network model and the second neural network model, using the training dataset. For example, the processor 110 may perform validation for the trained first neural network model and the trained second neural network model, using the validation dataset.

For example, the processor 110 may train the first neural network model and the second neural network model again, using result values obtained while performing the validation.

As described above, the vehicle control apparatus 100 according to example may obtain result values by inferring a type of an external object represented on specific coordinates, from the information obtained from the camera 120 and/or the LiDAR 130. The vehicle control apparatus 100 may combine the result values or may output at least one of the obtained result values, even if an error occurs in the sensor (e.g., the camera 120 and/or the LiDAR 130), thus improving driving stability, if controlling driving of the host vehicle.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., features of a similarity value among a plurality of points in a cluster of points) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of a similarity value among a plurality of points in a cluster of points) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of a similarity value among a plurality of points in a cluster of points) described herein.

Minimum risk maneuver (MRM) operation(s) may also be controlled, for example, based on one or more features (e.g., features of a similarity value among a plurality of points in a cluster of points) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of a similarity value among a plurality of points in a cluster of points) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of a similarity value among a plurality of points in a cluster of points) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

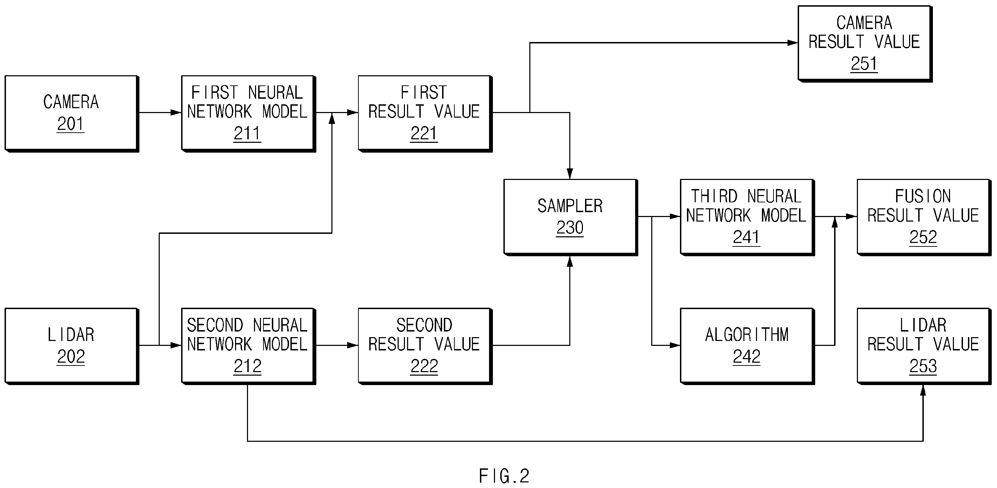

FIG. 2 shows an example of a process of outputting a result value, in an example of the present disclosure.

Referring to FIG. 2, a processor (e.g., a processor 110 of FIG. 1) of a vehicle control apparatus (e.g., a vehicle control apparatus 100 of FIG. 1) according to an example may obtain an image by a camera 201. In an example, the processor may obtain a point cloud by LiDAR 202.

For example, the processor may identify or determine a visual object corresponding to an external object in the image. For example, the processor may identify or determine a point cloud corresponding to the visual object in the image.

For example, the processor may obtain a first result value 221 indicating a type of a LiDAR point corresponding to at least one pixel included in the image obtained by the camera 201, based on inputting the image to a first neural network model 211. For example, the processor may obtain the first result value 221, based on the output value obtained from the first neural network model 211 and a point cloud obtained by the LiDAR 202.

For example, the processor may map the point cloud to the image, based on inputting the point cloud to an algorithm. For example, the algorithm may include a point cloud to image mapping algorithm.

For example, the processor may obtain a second result value 222, based on inputting the point cloud obtained by the LiDAR 202 to a second neural network model 212.

In an example, the processor may input the first result value 221 and the second result value 222 to a sampler 230. For example, the sampler 230 may include at least one of a prediction sampler or a KNN sampler, or any combination thereof.

For example, the prediction sampler may output a similarity, using Equation 1 described below.

[Equation 1]

$$CosineSimilarity(c, l) = \frac{c \cdot l}{||c|| \, ||l||} = \frac{\sum_{i=1}^{n} c_i l_i}{\sqrt{\sum_{i=1}^{n} c_i^2} \sqrt{\sum_{i=1}^{n} l_i^2}}$$

For example, Equation 1 above may include an algorithm for obtaining a similarity. For example, in Equation 1 above, c may be associated with types of pixels in the image. For example, in Equation 1 above, l may be associated with types of points in the point cloud. For example, in Equation 1 above, i may associated with a type's number. For example, if i is 1, $c_i$ and/or $l_i$ may indicate a first type. For example, if i is 2, $c_i$ and/or $l_i$ may indicate a second type. For example, if i is n, $c_i$ and/or $l_i$ may indicate an nth type. As described above, the processor of the vehicle control apparatus according to example may obtain a similarity, based on inputting result values (e.g., the first result value 221 and the second result value 222) to a designated algorithm.

For example, the processor may obtain $u^i$, based on obtaining the similarity. For example, $u^i$ may include an identifier indicating whether the type of the pixel and/or the type of the point are/is certain.

For example, if the similarity obtained by Equation 1 above is less than or equal to a threshold, the processor may obtain $u^i = 1$. For example, that $u^i = 1$ may indicate that the type of the pixel and/or the type of the point are/is uncertain.

For example, if the similarity obtained by Equation 1 above is greater than the threshold, the processor may

obtain $u^i$ = 0. For example, that $u^i$ = 0 may indicate that the type of the pixel and/or the type of the point are/is certain.

Depending on whether $u^i$ is 1 or $u^i$ is 0, the processor may determine whether to input the first result value 221 and/or the second result value 222 to a third neural network model 241 or an algorithm 242.

For example, if $u^i$ = 1, the processor may input the first result value 221 and/or the second result value 222 to the third neural network model 241. The processor may obtain $f^i$, based on inputting the first result value 221 and/or the second result value 222 to the third neural network model 241. For example, $f^i$ may include a result value output from the third neural network model 241.

For example, if $u^i$ = 0, the processor may input the first result value 221 and the second result value 222 to the algorithm 242. For example, the algorithm 242 may include Equation 2 below.

[Equation 2]

$$y^i = \sqrt{c_i \cdot l_i}$$

For example, in Equation 2 above, $c_i$ may include a probability value indicating the type of the pixel. For example, in Equation 2 above, $l_i$ may include a probability value indicating the type of the point.

For example, if $u^i$ = 0, the processor may obtain $y^i$, based on inputting the first result value 221 and the second result value 222 to the algorithm 242. For example, the processor may output $y^i$, based on obtaining $y^i$ from the algorithm 242.

For example, $y^i$ and/or $f^i$ may be included in a fusion result value 252.

In an example, if an error occurs in the camera 201, the processor may output a LiDAR output value 253, using the point cloud obtained by the LiDAR 202. For example, if the error occurs in the camera 201, the processor may fail to obtain a result value from the camera 201 and may output the LiDAR result value 253 obtained by inputting the point cloud obtained from the LiDAR 202 to the second neural network model 212.

In an example, if an error occurs in the LiDAR 202, the processor may output a camera result value 251, using the image obtained by the camera 201. For example, if the error occurs in the LiDAR 202, the processor may fail to obtain a result value from the LiDAR 202 and may output the camera result value 251 obtained by inputting the image obtained from the camera 201 to the first neural network model 211.

As described above, the vehicle control apparatus according to example may output a result value indicating a type of an external object represented on designated coordinates, based on identifying or determining the type of the external object, using at least one of the camera 201 or the LiDAR 202, or any combination thereof. Even if the error occurs in one of the camera 201 or the LiDAR 202, the vehicle control apparatus may output a result value using the sensor in which the error does not occur, thus improving stability if driving a host vehicle.

In an example, the processor may compare the camera result value 251 with the fusion result value 252. In an example, the processor may compare the LiDAR result value 253 with the fusion result value 252.

For example, the processor may compare at least one of the camera result value 251, the fusion result value 252, or the LiDAR result value 253, or any combination thereof, based on a designated algorithm (e.g., Kullback-Leiber divergence and/or knowledge distillation).

For example, the processor may obtain a first loss value, based on comparing the camera result value 251 with the fusion result value 252.

For example, the processor may obtain a second loss value, based on comparing the LiDAR result value 253 with the fusion result value 252.

For example, the first loss value and/or the second loss value may be obtained by Equation 3 below.

[Equation 3]

$$Loss = \frac{1}{K} * \sum_{i}^{K} \left( \frac{D_{KL}(p_c^i||m_c^i) + D_{KL}(p_f||m_c^i)}{2} + \frac{D_{KL}(p_l^i||m_l^i) + D_{KL}(p_f||m_l^i)}{2} \right)$$

In Equation 3 above, $p_f$ may include a probability distribution result for each type of the third neural network model 241. In Equation 3 above, $p_c^i$ may include the result of probability distribution for each type, which is obtained from third neural network model 241. In Equation 3 above, $p_c^i$ may include the result of probability distribution for each type of the first neural network model 211 of an $i$th surrounding point around the result point of the third neural network model 241. In Equation 3 above, $p_l^i$ may include the result of probability distribution for each type of the second neural network model 212 of the $i$th surrounding point around the result point of the third neural network model 241. In Equation 3 above, $D_{KL}$ may include Kullback-Leibler divergence. In Equation 3 above, $m_c^i$ may refer to camera mixture distribution. $m_l^i$ may refer to LiDAR mixture distribution. For example, $m_c^i$ and/or $m_l^i$ may be obtained by Equations 4 and 5 below.

[Equation 4]

$$m_c^i = \frac{p_c^i + p_f}{2}$$

[Equation 5]

$$m_l^i = \frac{p_l^i + p_f}{2}$$

In Equation 5 above, $p_c^i$ may include the result of probability distribution for each type of the first neural network model 211 of the $i$th surrounding point around the result point of the third neural network model 241. In Equation 5 above, $p_l^i$ may include the result of probability distribution for each type of the second neural network model 212 of the $i$th surrounding point around the result point of the third neural network model 241. In Equation 5 above, $p_f$ may include a probability distribution result for each type of the third neural network model 241.

As described above, the processor of the vehicle control apparatus according to example may output at least one of the camera result value 251, the LiDAR result value 253, or the fusion result value 252, or any combination thereof, using the above-mentioned equations.

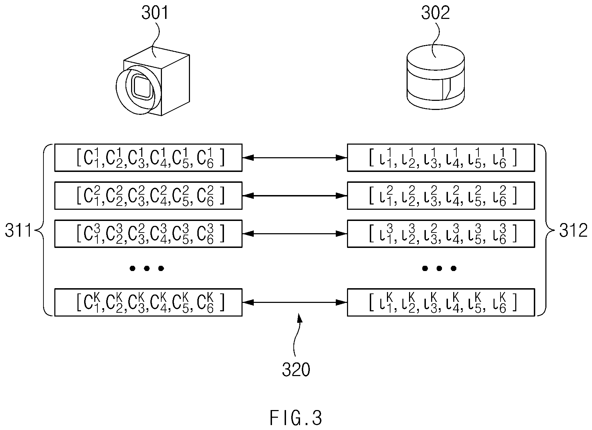

FIG. 3 shows an example of information or data obtained by a camera and/or LiDAR, in an example of the present disclosure.

Referring to FIG. 3, a vehicle control apparatus (e.g., a vehicle control apparatus 100 of FIG. 1) according to example may include a camera 301 (e.g., a camera 120 of FIG. 1) and LiDAR 302 (e.g., LiDAR 130 of FIG. 1).

A processor (e.g., a processor 110 of FIG. 1) of the vehicle control apparatus may obtain an image from the camera 301. For example, the processor may input the image obtained from the camera 301 to a first neural network model. For example, the first neural network model may include a camera segmentation network model.

For example, the processor may obtain a point cloud from the LiDAR 302. For example, the processor may input the point cloud obtained from the LiDAR 302 to a second neural network model. For example, the second neural network model may include a LiDAR segmentation network model.

In an example, the processor may obtain a first prediction score 311 indicating a type of each of pixels included in the image obtained from the camera 301, based on inputting the image to the first neural network model. For example, the first prediction score 311 may be included in a first result value.

In an example, the processor may obtain a second prediction score 312 indicating a type of each of points included in the point cloud obtained from the LiDAR 302, based on inputting the point cloud to the second neural network model. For example, the second prediction score 312 may be included in a second result value.

In an example, the processor may apply a designated algorithm 320 to the first prediction score 311 and the second prediction score 312. For example, the processor may input the first prediction score 311 and the second prediction score 312 to the designated algorithm 320. For example, the designated algorithm 320 may include a cosine similarity algorithm. For example, the cosine similarity algorithm may be represented as Equation 1 described in FIG. 2.

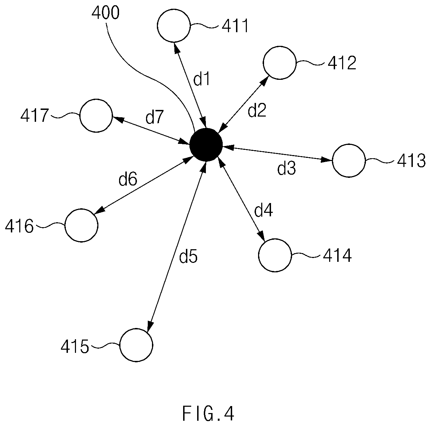

FIG. 4 shows an example of applying a KNN sampler, in an example of the present disclosure.

Referring to FIG. 4, a vehicle control apparatus (e.g., a vehicle control apparatus 100 of FIG. 1) according to an example may include a camera (e.g., a camera 120 of FIG. 1) and/or LiDAR (e.g., LiDAR 130 of FIG. 1). For example, a processor (e.g., a processor 110 of FIG. 1) of the vehicle control apparatus may obtain a first result value, based on obtaining an image by the camera. For example, the processor may obtain a second result value, based on obtaining a point cloud by the LiDAR.

A point described below may refer to a point at which an external object is represented at a designated coordinate value, which is not limited to the point obtained by the LiDAR.

In an example, the processor may identify or determine a type of a point 400 represented on designated coordinates, using the first result value and/or the second result value. For example, the processor may identify or determine whether the type of the point 400 represented on the designated coordinates is certain. For example, the processor compare types of other points 411, 412, 413, 414, 415, 416, and 417 located within a designated distance from the point 400 with the type of the point 400, based on that it is identified that the type of the point 400 represented on the designated coordinates is not certain.

For example, the processor may compare the type of the point 400 with the types of the other points 411, 412, 413, 414, 415, 416, and 417, using a normalized distance.

For example, the processor may obtain first data, using a first normalized distance d1 between the first surrounding point 411 and the point 400. For example, the processor may obtain second data, using a second normalized distance d2 between the second surrounding point 412 and the point 400. For example, the processor may obtain third data, using a third normalized distance d3 between the third surrounding point 413 and the point 400. For example, the processor may obtain fourth data, using a fourth normalized distance d4 between the fourth surrounding point 414 and the point 400. For example, the processor may obtain fifth data, using a fifth normalized distance d5 between the fifth surrounding point 415 and the point 400. For example, the processor may obtain sixth data, using a sixth normalized distance d6 between the sixth surrounding point 416 and the point 400. For example, the processor may obtain seventh data, using a seventh normalized distance d7 between the seventh surrounding point 417 and the point 400.

For example, the processor may obtain a fusion prediction score, based on inputting the first to seventh data to a vision transformer encoder and/or a multi-layer perceptron mixer. For example, the fusion prediction score may be obtained based on at least one of a score for predicting a type of a pixel, a score for predicting a type of a LiDAR point, or a normalized distance, or any combination thereof.

In an example, the processor may apply a designated function to the result value indicating the type of the point 400 and the fusion prediction score, thus outputting a final prediction score. For example, the designated function may include a concat function. For example, the concat function may include a function for sequentially concatenating two or more arrays one by one to return a new array.

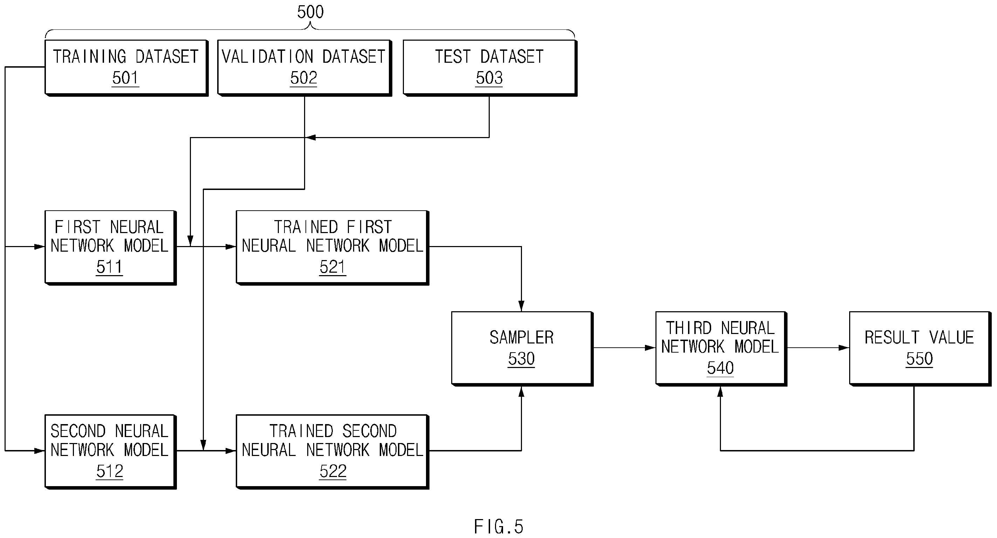

FIG. 5 shows an example of training neural network models, in an example of the present disclosure.

Referring to FIG. 5, a processor (e.g., a processor 110 of FIG. 1) of a vehicle control apparatus (e.g., a vehicle control apparatus 100 of FIG. 1) according to an example may train at least one of a first neural network model 511, a second neural network model 512, or a third neural network model 540, or any combination thereof.

For example, the processor may train the at least one of the first neural network model 511, the second neural network model 512, or the third neural network model 540, or the any combination thereof, using a total dataset 500 stored in a memory (e.g., a memory 140 of FIG. 1).

For example, the total dataset 500 may include a training dataset 501, a validation dataset 502, and a test dataset 503.

For example, the processor may train the first neural network model 511, using the training dataset 501. For example, the processor may train the second neural network model 512, using the training dataset 501.

For example, the processor may validate at least one of the trained first neural network model 521 or the trained second neural network model 522, or any combination thereof, using the validation dataset 502. For example, the processor may input the validation dataset 502 to the trained first neural network model 521 and the trained second neural network model 522.

For example, the processor may input the validation dataset 502 to the trained first neural network model 521 to obtain a first validation result value. For example, the processor may input the validation dataset 502 to the trained second neural network model 522 to obtain a second validation result value. For example, the first validation result value and/or the second validation result value may be referred to as an uncertain prediction point.

In an example, the processor may input the first validation result value and/or the second validation result value to a sampler 530. For example, the first validation result value and/or the second validation result value may include result values, a similarity of which is less than or equal to a threshold. For example, the sampler 530 may output a dataset including the result values, the similarity of which is greater than or equal to the threshold, among the first validation result values and/or the second validation result values. For example, the dataset may include at least one of a camera prediction score, a LiDAR prediction score, a KNN camera prediction score, a KNN LiDAR prediction score, or a point label, or any combination thereof.

In an example, the processor may train the third neural network model 540, using the dataset output from the sampler 530. In an example, the processor may perform validation for the third neural network model 540, using the dataset output from the sampler 530.

In an example, the processor may obtain a result value 550, based on inputting the dataset to the third neural network model 540. The processor may train the third neural network model 540, using the result value 550 obtained from the third neural network model 540.

In an example, the processor may input the test dataset 503 to at least one of the trained first neural network model 521 or the trained second neural network model 522, or any combination thereof 503. For example, the processor may perform a test on the at least one of the trained first neural network model 521 or the trained second neural network model 522, or the any combination thereof 503, using the test dataset 503. For example, the processor may obtain a test result from the at least one of the trained first neural network model 521 or the trained second neural network model 522, or the any combination thereof.

For example, the processor may input the test result to the sampler 530. For example, the processor may obtain an uncertain point and/or a certain point, based on inputting the test result to the sampler 530.

For example, if obtaining the uncertain point, the processor may input the obtained uncertain point to the third neural network model 540 to output a result.

For example, if obtaining the certain point, the processor may output the result of performing a geometric mean for the obtained certain point.

For example, the processor may provide an evaluator with the result output from the third neural network model 540 and the result of performing the geometric mean as inputs, thus obtaining at least one of accuracy, mean intersection over union (mIOU), or class intersection over union (IOU), or any combination thereof.

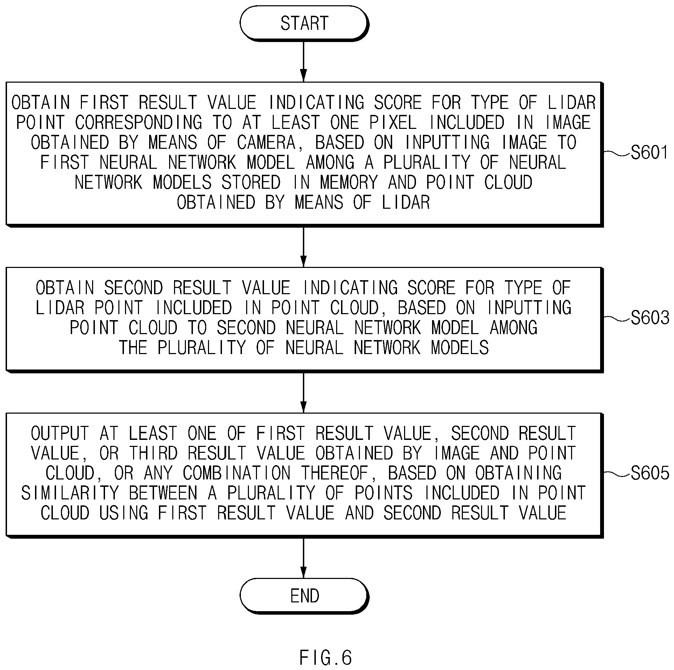

FIG. 6 shows an example of a flowchart associated with a vehicle control method according to an example of the present disclosure. For convenience, FIG. 6 is described by way of an example in which the steps are performed by a processor (e.g., control circuitry) . One, some, or all steps of FIG. 6, or portions thereof, may be performed by one or more other circuits. One or some, steps of FIG. 6 may be omitted, performed in other orders, and/or otherwise modified, and/or one or more additional steps may be added.

Hereinafter, it is assumed that a vehicle control apparatus 100 of FIG. 1 performs a process of FIG. 6. Furthermore, in a description of FIG. 6, an operation described as being performed by an apparatus may be understood as being controlled by a processor 110 of the vehicle control apparatus 100.

At least one of the operations of FIG. 6 may be performed by the vehicle control apparatus 100 of FIG. 1. At least one of the operations of FIG. 6 may be controlled by the processor 110 of FIG. 1. The respective operations of FIG. 6 may be sequentially performed, but are not necessarily sequentially performed. For example, an order of the respective operations may be changed, and at least two operations may be performed in parallel.

Referring to FIG. 6, in S601, the vehicle control method according to example may include obtaining a first result value indicating a score for a type of a LiDAR point corresponding to at least one pixel included in an image, based on inputting the image to a first neural network model and a point cloud. For example, the first neural network model may be stored in a memory.

For example, the vehicle control method may include obtaining the first result value, based on projecting the point cloud onto a 2D coordinate system to compare the at least one pixel with at least one point.

In S603, the vehicle control method according to example may include obtaining a second result value indicating a score for the type of the LiDAR point included in the point cloud, based on inputting the point cloud to a second neural network model. For example, the second neural network model may be stored in the memory.

In S605, the vehicle control method according to example may include outputting at least one of the first result value, the second result value, or a third result value obtained by the image and the point cloud, or any combination thereof, based on obtaining a similarity between a plurality of points included in the point cloud using the first result value and the second result value.

For example, the vehicle control method may include obtaining the similarity, based on inputting the first result value and the second result value to a first designated algorithm.

For example, the vehicle control method may include obtaining a first identifier indicating that the first result value and the second result value are not similar to each other, based on that the similarity is less than or equal to a threshold.

For example, the vehicle control method may include obtaining a second identifier indicating that the first result value and the second result value are similar to each other, based on that the similarity is greater than the threshold.

For example, the vehicle control method may include comparing types of other points located within a designated distance from the at least one point with a type of the at least one point, based on obtaining the first identifier.

For example, the vehicle control method may include inputting the first result value and the second result value to a third neural network model to obtain the third result value, based on obtaining the first identifier.

For example, the vehicle control method may include outputting a fourth result value obtained by inputting the first result value and the second result value to a second designated algorithm, based on obtaining the second identifier.

For example, the vehicle control method may include obtaining the third result value, based on inputting the first result value and the second result value to the third neural network model among a plurality of neural network models. For example, the third neural network model may be stored in the memory.

The vehicle control method according to example may include training at least one of the first neural network model, the second neural network model, or the third neural network model, or any combination thereof, using at least one of a training dataset, a validation dataset, or a test dataset, which is stored in the memory, or any combination thereof.

For example, the vehicle control method may include training the first neural network model and the second neural network model, using the training dataset.

For example, the vehicle control method may include performing validation for the trained first neural network model and the trained second neural network model, using the validation dataset.

For example, the vehicle control method may include training the at least one of the first neural network model, the second neural network model, or the third neural network model, or the any combination thereof, using result values obtained while performing the validation.

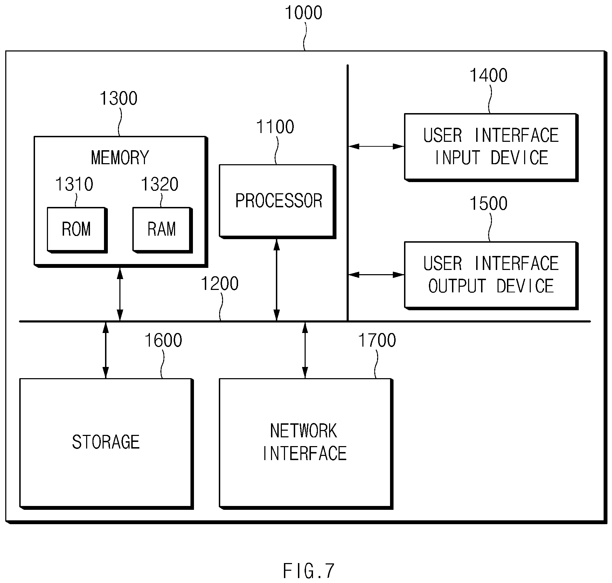

FIG. 7 shows an example of a computing system associated with a vehicle control apparatus or a vehicle control method according to an example of the present disclosure.

Referring to FIG. 7, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a read only memory (ROM) 1310 and a random access memory (RAM) 1320.

Accordingly, the operations of the method or algorithm described in connection with the examples disclosed in the specification may be directly implemented with a hardware module, a software module, or a combination of the hardware module and the software module, which is executed by the processor 1100. The software module may reside on a storage medium (that is, the memory 1300 and/or the storage 1600) such as a RAM, a flash memory, a ROM, an EPROM, an EEPROM, a register, a hard disc, a removable disk, and a CD-ROM.

The exemplary storage medium may be coupled to the processor 1100. The processor 1100 may read out information from the storage medium and may write information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

The present disclosure has been made to solve the above-mentioned problems occurring in the prior art while advantages achieved by the prior art are maintained intact.

An example of the present disclosure provides a vehicle control apparatus for identifying or determining a type of an external object using a plurality of neural network models and a method thereof.

Another example of the present disclosure provides a vehicle control apparatus for outputting a result of identifying or determining a type of an external object, although an error occurs in one sensor, if identifying or determining the type of the external object using a plurality of sensors, and a method thereof.

The technical problems to be solved by the present disclosure are not limited to the aforementioned problems, and any other technical problems not mentioned herein will be clearly understood from the following description by those skilled in the art to which the present disclosure pertains.

According to an example of the present disclosure, a vehicle control apparatus may include a camera that obtains an image, light detection and ranging (LiDAR) that obtains a point cloud, a memory storing a plurality of neural network models, and a processor. The processor may obtain a first result value indicating a score for a type of a LiDAR point corresponding to at least one pixel included in the image, based on inputting the image to a first neural network model among the plurality of neural network models and the point cloud, may obtain a second result value indicating a score for the type of the LiDAR point included in the point cloud, based on inputting the point cloud to a second neural network model among the plurality of neural network models, and may output at least one of the first result value, the second result value, or a third result value obtained by the image and the point cloud, or any combination thereof, based on obtaining a similarity between a plurality of points included in the point cloud using the first result value and the second result value.

In an example, the processor may obtain the third result value, based on inputting the first result value and the second result value to a third neural network model among the plurality of neural network models.

In an example, the processor may obtain the first result value, based on projecting the point cloud onto a two-dimensional (2D) coordinate system to compare the at least one pixel with at least one point included in the point cloud.

In an example, the processor may obtain the similarity, based on inputting the first result value and the second result value to a first designated algorithm.

In an example, the processor may obtain a first identifier indicating that the first result value and the second result value are not similar to each other, based on that the similarity is less than or equal to a threshold, or may obtain a second identifier indicating that the first result value and the second result value are similar to each other, based on that the similarity is greater than the threshold.

In an example, the processor may input the first result value and the second result value to a third neural network model among the plurality of neural network models to obtain the third result value, based on obtaining the first identifier.

In an example, the processor may output a fourth result value obtained by inputting the first result value and the second result value to a second designated algorithm, based on obtaining the second identifier.

In an example, the processor may compare types of other points located within a designated distance from at least one point included in the point cloud with a type of the at least one point, based on obtaining the first identifier.

In an example, the memory may include at least one of a training dataset for training the plurality of neural network models or a validation dataset for training the plurality of neural network models, or any combination thereof.

In an example, the processor may train the first neural network model and the second neural network model, using the training dataset, may perform validation for the trained first neural network model and the trained second neural network model, using the validation dataset, and may train at least one of the first neural network model, the second neural network model, or a third neural network model among the plurality of neural network models, or any combination thereof, using result values obtained while performing the validation.

According to another example of the present disclosure, a vehicle control method may include obtaining a first result value indicating a score for a type of a LiDAR point corresponding to at least one pixel included in an image obtained by a camera, based on inputting the image to a first neural network model among a plurality of neural network models stored in a memory and a point cloud obtained by LiDAR, obtaining a second result value indicating a score for the type of the LiDAR point included in the point cloud, based on inputting the point cloud to a second neural network model among the plurality of neural network models, and outputting at least one of the first result value, the second result value, or a third result value obtained by the image and the point cloud, or any combination thereof, based on obtaining a similarity between a plurality of points included in the point cloud using the first result value and the second result value.

The vehicle control method according to example may further include obtaining the third result value, based on inputting the first result value and the second result value to a third neural network model among the plurality of neural network models.

The vehicle control method according to example may further include obtaining the first result value, based on projecting the point cloud onto a 2D coordinate system to compare the at least one pixel with at least one point included in the point cloud.

The vehicle control method according to example may further include obtaining the similarity, based on inputting the first result value and the second result value to a first designated algorithm.

The vehicle control method according to example may further include obtaining a first identifier indicating that the first result value and the second result value are not similar to each other, based on that the similarity is less than or equal to a threshold, or obtaining a second identifier indicating that the first result value and the second result value are similar to each other, based on that the similarity is greater than the threshold.

The vehicle control method according to example may further include inputting the first result value and the second result value to a third neural network model among the plurality of neural network models to obtain the third result value, based on obtaining the first identifier.

The vehicle control method according to example may further include outputting a fourth result value obtained by inputting the first result value and the second result value to a second designated algorithm, based on obtaining the second identifier.

The vehicle control method according to example may further include comparing types of other points located within a designated distance from at least one point included in the point cloud with a type of the at least one point, based on obtaining the first identifier.

In an example, the memory may include at least one of a training dataset for training the plurality of neural network models or a validation dataset for training the plurality of neural network models, or any combination thereof.

The vehicle control method according to example may further include training the first neural network model and the second neural network, using the training dataset, performing validation for the trained first neural network model and the trained second neural network model, using the validation dataset, and training at least one of the first neural network model, the second neural network model, or a third neural network model among the plurality of neural network models, or any combination thereof, using result values obtained while performing the validation.

The present technology may identify or determine a type of an external object using a plurality of neural network models.

Furthermore, the present technology may output a result of identifying or determining the type of the external object, although an error occurs in one sensor, if identifying or determining the type of the external object using a plurality of sensors.

In addition, various effects ascertained directly or indirectly through the present disclosure may be provided.

Hereinabove, although the present disclosure has been described with reference to examples and the accompanying drawings, the present disclosure is not limited thereto, but may be variously modified and altered by those skilled in the art to which the present disclosure pertains without departing from the spirit and scope of the present disclosure claimed in the following claims.

Therefore, examples of the present disclosure are not intended to limit the technical spirit of the present disclosure, but provided only for the illustrative purpose. The scope of the present disclosure should be construed on the basis of the accompanying claims, and all the technical ideas within the scope equivalent to the claims should be included in the scope of the present disclosure.

**Claims**

1. An apparatus for controlling autonomous driving of a vehicle, the apparatus comprising:

   a first sensor configured to obtain an image;
   a second sensor configured to obtain a cluster of points;
   a memory storing a plurality of neural network models; and
   a processor configured to:

   obtain, based on inputting the image to a first neural network model among the plurality of neural network models and based on the cluster of points, a first value, wherein the first value indicates a first score for a type of a point associated with the second sensor, and wherein the point corresponds to at least one pixel included in the image;
   obtain, based on inputting the cluster of points to a second neural network model among the plurality of neural network models, a second value, wherein the second value indicates a second score for the type of the point, and wherein the point is included in the cluster of points; and
   output, based on obtaining a similarity value among a plurality of points included in the cluster of points using the first value and the second value, at least one of:

   the first value,
   the second value, or
   a third value obtained by the image and the cluster of points;
   generate a signal associated with the similarity value among the plurality of points; and
   control, based on the signal, autonomous driving of the vehicle.

2. The apparatus of claim 1, wherein the processor is configured to:
   obtain, based on inputting the first value and the second value to a third neural network model among the plurality of neural network models, the third value.

3. The apparatus of claim 1 or 2, wherein the processor is configured to:
   obtain, based on projecting the cluster of points onto a two-dimensional (2D) coordinate system to compare the at least one pixel with at least one point included in the cluster of points, the first value.

4. The apparatus of anyone of claims 1-3, wherein the processor is configured to:
   obtain, based on inputting the first value and the second value to a first algorithm, the similarity value.

5. The apparatus of anyone of claims 1-4, wherein the processor is configured to:

   obtain, based on the similarity value being less than or equal to a threshold value, a first identifier, wherein the first identifier indicates that the first value and the second value are not similar to each other; or
   obtain, based on the similarity value being greater than the threshold value, a second identifier, wherein the second identifier indicates that the first value and the second value are similar to each other.

6. The apparatus of claim 5, wherein the processor is configured to:
   input, based on obtaining the first identifier, the first value and the second value to a third neural network model among the plurality of neural network models to obtain the third value.

7. The apparatus of claim 5 or 6, wherein the processor is configured to:
   output, based on obtaining the second identifier, a fourth value obtained by inputting the first value and the second value to a second algorithm.

8. The apparatus of anyone of claims 5-7, wherein the processor is configured to:
   compare, based on obtaining the first identifier, types of other points located within a designated distance from at least one point included in the cluster of points with a type of the at least one point.

9. The apparatus of anyone of claims 1-8, wherein the memory comprises at least one of:

   a training dataset for training the plurality of neural network models; or

a validation dataset for validating the plurality of neural network models.

10. The apparatus of claim 9, wherein the processor is configured to:

train, based on the training dataset, the first neural network model and the second neural network model;
perform validation, based on the validation dataset, for the trained first neural network model and the trained second neural network model; and
train, based on the validation, at least one of:

the first neural network model among the plurality of neural network models,
the second neural network model among the plurality of neural network models, or
a third neural network model among the plurality of neural network models.

11. A method performed by an apparatus for controlling autonomous driving of a vehicle, the method comprising:

obtaining, based on inputting an image to a first neural network model and based on a cluster of points, a first value, wherein the first value indicates a first score for a type of a point associated with a second sensor, wherein the point corresponds to at least one pixel included in the image, wherein the image is obtained via a first sensor, wherein the first neural network model is among a plurality of neural network models stored in a memory, and wherein the cluster of points are obtained via the second sensor;
obtaining, based on inputting the cluster of points to a second neural network model among the plurality of neural network models, a second value, wherein the second value indicates a second score for the type of the point, and wherein the point is included in the cluster of points; and
outputting, based on obtaining a similarity value among a plurality of points included in the cluster of points using the first value and the second value, at least one of:

the first value,
the second value, or
a third value obtained by the image and the cluster of points;
generating a signal associated with the similarity value among the plurality of points; and
controlling, based on the signal, autonomous driving of the vehicle.

12. The method of claim 11, further comprising:
obtaining, based on inputting the first value and the second value to a third neural network model among the plurality of neural network models, the third value.

13. The method of claim 11 or 12, further comprising:
obtaining, based on projecting the cluster of points onto a two-dimensional (2D) coordinate system to compare the at least one pixel with at least one point included in the cluster of points, the first value.

14. The method of anyone of claims 11-13, further comprising:
obtaining, based on inputting the first value and the second value to a first algorithm, the similarity value.

15. The method of anyone of claims 11-14, further comprising:

obtaining, based on the similarity value being less than or equal to a threshold value, a first identifier, wherein the first identifier indicates that the first value and the second value are not similar to each other; or
obtaining, based on that the similarity value being greater than the threshold value, a second identifier, wherein the second identifier indicates that the first value and the second value are similar to each other.

VEHICLE CONTROL APPARATUS
100

PROCESSOR
110

CAMERA
120

LIDAR
130

MEMORY
140

FIG.1

FIG.2

FIG.3

FIG.4

EP 4 675 574 A1

500

| TRAINING DATASET 501 | VALIDATION DATASET 502 | TEST DATASET 503 |

FIRST NEURAL NETWORK MODEL 511

TRAINED FIRST NEURAL NETWORK MODEL 521

SAMPLER 530

THIRD NEURAL NETWORK MODEL 540

RESULT VALUE 550

SECOND NEURAL NETWORK MODEL 512

TRAINED SECOND NEURAL NETWORK MODEL 522

FIG.5

START

OBTAIN FIRST RESULT VALUE INDICATING SCORE FOR TYPE OF LIDAR
POINT CORRESPONDING TO AT LEAST ONE PIXEL INCLUDED IN IMAGE
OBTAINED BY MEANS OF CAMERA, BASED ON INPUTTING IMAGE TO
FIRST NEURAL NETWORK MODEL AMONG A PLURALITY OF NEURAL
NETWORK MODELS STORED IN MEMORY AND POINT CLOUD
OBTAINED BY MEANS OF LIDAR ～S601

OBTAIN SECOND RESULT VALUE INDICATING SCORE FOR TYPE OF
LIDAR POINT INCLUDED IN POINT CLOUD, BASED ON INPUTTING
POINT CLOUD TO SECOND NEURAL NETWORK MODEL AMONG
THE PLURALITY OF NEURAL NETWORK MODELS ～S603

OUTPUT AT LEAST ONE OF FIRST RESULT VALUE, SECOND RESULT
VALUE, OR THIRD RESULT VALUE OBTAINED BY IMAGE AND POINT
CLOUD, OR ANY COMBINATION THEREOF, BASED ON OBTAINING
SIMILARITY BETWEEN A PLURALITY OF POINTS INCLUDED IN POINT
CLOUD USING FIRST RESULT VALUE AND SECOND RESULT VALUE ～S605

END

FIG.6

1000

1300

1100

MEMORY

1310    1320

ROM       RAM

PROCESSOR

1400

USER INTERFACE
INPUT DEVICE

1500

USER INTERFACE
OUTPUT DEVICE

1200

1600    1700

STORAGE

NETWORK
INTERFACE

FIG.7

## EUROPEAN SEARCH REPORT

**Application Number**

EP 24 21 7481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAOQING XU ET AL: "FusionPainting: Multimodal Fusion with Adaptive Attention for 3D Object Detection", ARXIV.ORG, CORNELL UNIVERSITY LIBRARY, 201 OLIN LIBRARY CORNELL UNIVERSITY ITHACA, NY 14853, 10 August 2021 (2021-08-10), XP091027119, Title; * abstract; figure 2 * * 2D Painting Module; page 3 * * 3D Painting Module; page 3 * | 1-15 | INV. G06V10/82 G06V20/56 |
| A | XUYANG BAI ET AL: "TransFusion: Robust LiDAR-Camera Fusion for 3D Object Detection with Transformers", ARXIV.ORG, CORNELL UNIVERSITY LIBRARY, 201 OLIN LIBRARY CORNELL UNIVERSITY ITHACA, NY 14853, 22 March 2022 (2022-03-22), XP091182235, * the whole document * | 1-15 | |
| A | SOURABH VORA ET AL: "PointPainting: Sequential Fusion for 3D Object Detection", ARXIV.ORG, CORNELL UNIVERSITY LIBRARY, 201 OLIN LIBRARY CORNELL UNIVERSITY ITHACA, NY 14853, 22 November 2019 (2019-11-22), XP081537898, * the whole document * | 1-15 | **TECHNICAL FIELDS SEARCHED (IPC)**<br><br>G06V |

The present search report has been drawn up for all claims

| Place of search | Date of completion of the search | Examiner |
|---|---|---|
| The Hague | 27 March 2025 | Meier, Ueli |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240088260